# FASCICULE DE BREVET EUROPEEN

(11) **EP 2 352 674 B1**
(45) Date de publication et mention de la délivrance du brevet: **16.01.2013**
(21) Numéro de dépôt: 09797119.6
(22) Date de dépôt: 30.11.2009
(51) Int. Cl.: B64D 27/26

(54) **ENSEMBLE MOTEUR POUR AERONEF COMPRENANT UNE STRUCTURE RIGIDE MODULAIRE DE MAT D'ACCROCHAGE**
FLUGZEUGMOTOR MIT STARREM MODULAREM AUFBAU FÜR EINEN MONTAGEMAST
AIRCRAFT ENGINE ASSEMBLY INCLUDING A RIGID MODULAR STRUCTURE FOR A MOUNTING PYLON3

(30) Priorité: 01.12.2008 FR 0858166
(43) Date de publication de la demande: 10.08.2011
(73) Titulaire: Airbus Operations, 31060 Toulouse (FR)
(72) Inventeur: MARCHE, Jacques Hervé, F-31200 Toulouse (FR)
(74) Mandataire: Ilgart, Jean-Christophe
(86) Numéro de dépôt international: PCT/FR2009/052334
(87) Numéro de publication internationale: WO 2010/063927

(56) Documents cités:
- EP-A- 0 311 155
- FR-A- 2 900 906
- US-A- 4 854 525

## Description

La présente invention se rapporte de façon générale à un ensemble moteur pour aéronef, en particulier du type destiné à être implanté latéralement sur une partie arrière de l'aéronef.

Habituellement, un aéronef de modèle défini est équipé de turbomoteurs d'un type donné parmi une pluralité de possibilités proposés par les différents motoristes. Ainsi, des aéronefs d'un même modèle peuvent être équipés de turbomoteurs différents, ce qui engendre des inconvénients en termes de conception des mâts d'accrochage de ces turbomoteurs. En effet, chaque mât d'accrochage doit être adapté au type de turbomoteur retenu, ce qui nécessite de prévoir, pour un même modèle d'aéronef, une pluralité de mâts de conceptions différentes. Cela génère des surcoûts de production, principalement en raison de l'impossibilité de fabriquer l'ensemble des mâts d'un même modèle d'aéronef en très grande série, selon la même conception.

Le document US4854625, qui décrit toutes les caractéristiques du préambule de la revendication 1, montre un tel mât d'accrochage.

L'invention a donc pour but de proposer un ensemble moteur pour aéronef remédiant au moins partiellement à l'inconvénient mentionné ci-dessus, relatif aux réalisations de l'art antérieur.

Pour ce faire, l'invention a pour objet un ensemble moteur pour aéronef comprenant un turbomoteur ainsi qu'un mât d'accrochage du turbomoteur, ledit ensemble moteur étant destiné à être rapporté latéralement sur l'aéronef, le mât comportant une structure rigide ainsi que des premiers moyens de fixation interposés entre ladite structure rigide et le turbomoteur, ladite structure rigide comprenant un caisson central s'étendant selon une direction principale du mât, sensiblement parallèle à un axe longitudinal du turbomoteur. Selon l'invention, ladite structure rigide comporte en outre une extension avant du caisson central, ladite extension avant comportant un organe supérieur fixé et en appui sur une surface supérieure d'une extrémité avant du caisson central, ainsi qu'un organe inférieur fixé et en appui sur une surface inférieure de ladite extrémité avant du caisson, ladite structure rigide comportant en outre une extension arrière du caisson central, ladite extension arrière comportant un organe supérieur fixé et en appui sur une surface supérieure d'une extrémité arrière du caisson central, ainsi qu'un organe inférieur fixé et en appui sur une surface inférieure de ladite extrémité arrière du caisson, lesdites extensions avant et arrière portant au moins en partie lesdits premiers moyens de fixation.

Par conséquent, la conception originale proposée par l'invention présente une structure rigide de mât d'accrochage à caractère modulaire, facilitant son adaptation aux turbomoteurs de conceptions différentes. Par ailleurs, à titre d'exemple indicatif, quelque soit le type de turbomoteur retenu, le caisson central de la structure rigide peut être toujours de même conception, seules les extensions avant et arrière pouvant alors être éventuellement adaptées en forme et/ou en dimensions en fonction dudit type de turbomoteur retenu, pour permettre l'accrochage de ce dernier à la structure rigide.

Cette modularité engendre de manière générale une diminution des coûts de production, principalement en raison de la possibilité de fabriquer au moins une partie, de préférence le caisson central, de l'ensemble des mâts d'accrochage d'un même modèle d'aéronef en très grande série, selon la même conception.

De préférence, ladite extension avant s'étend vers l'avant au-delà dudit caisson central, et/ou ladite extension arrière s'étend vers l'arrière au-delà dudit caisson central. Néanmoins, une alternative peut consister à prévoir que l'une et/ou l'autre de ces extensions ne s'étendent pas au-delà de leur extrémité de caisson central associée, sans sortir du cadre de l'invention. Dans un tel cas, l'extension du caisson central ne s'effectue pas selon la direction principale du mât, assimilable à sa direction longitudinale, mais s'effectue selon la direction de son épaisseur orthogonale à cette dernière direction.

De préférence, l'organe supérieur et l'organe inférieur de ladite extension avant sont raccordés l'un à l'autre au niveau de leur extrémité avant de manière à former sensiblement un V ouvert vers l'arrière et logeant ladite extrémité avant du caisson central entre les branches du V, et/ou l'organe supérieur et l'organe inférieur de ladite extension arrière sont raccordés l'un à l'autre au niveau de leur extrémité arrière de manière à former sensiblement un V ouvert vers l'avant et logeant ladite extrémité arrière du caisson central entre les branches du V. Il est noté que le fait de loger les extrémités du caisson central en appui au sein des V permet d'assurer un bon transfert des efforts entre les extensions et le caisson central, notamment les efforts de poussée s'exerçant selon la direction longitudinale.

De préférence, lesdits organes supérieurs et inférieurs prennent chacun la forme d'un caisson.

De préférence, ladite extension avant porte une attache moteur avant desdits premiers moyens de fixation, et ladite extension arrière porte une attache moteur arrière desdits premiers moyens de fixation.

De préférence, une pluralité de tirants sont prévus pour la fixation de ladite extension avant sur l'extrémité avant du caisson central, lesdits tirants traversant successivement l'organe supérieur, l'extrémité avant du caisson central et l'organe inférieur, et une pluralité de tirants sont également prévus pour la fixation de ladite extension arrière sur l'extrémité arrière du caisson central, lesdits tirants traversant successivement l'organe supérieur, l'extrémité arrière du caisson central et l'organe inférieur.

De préférence, ladite structure rigide présente un plan fictif parallèle à la direction longitudinale du turbomoteur et formant sensiblement plan de symétrie pour ladite structure, les extrémités arrière des organes supérieur et inférieur de l'extension avant se situant de part et d'autre de ce plan de symétrie, et les extrémités avant des organes supérieur et inférieur de l'extension arrière se situant de part et d'autre de ce plan de symétrie.

De préférence, le mât comporte également des seconds moyens de fixation destinés à être interposés entre ladite structure rigide et la structure de l'aéronef.

L'invention a également pour objet un aéronef comprenant au moins un ensemble moteur tel que décrit ci-dessus.

D'autres avantages et caractéristiques de l'invention apparaîtront dans la description détaillée non limitative ci-dessous.

Cette description sera faite au regard des dessins annexés parmi lesquels ;
- la figure 1 représente une vue schématique de dessus d'une partie arrière d'aéronef, intégrant un ensemble moteur selon un mode de réalisation préféré de la présente invention ;
- la figure 2 représente une vue plus détaillée en perspective de la structure rigide du mât d'accrochage équipant l'ensemble montré sur la figure 1 ;
- la figure 3 représente une vue partiellement éclatée de la structure rigide montrée sur la figure 2, en coupe selon un plan orthogonal à un plan de symétrie de la structure rigide, parallèle à l'axe longitudinal du turbomoteur associé ;
- la figure 4 représente une vue schématique de l'assemblage entre l'extension avant et le caisson central de la structure rigide montrée sur les figures 2 et 3 ; et
- la figure 5 représente une vue similaire à celle montrée de la figure 2, sur laquelle la structure rigide prend la forme d'une alternative de réalisation.

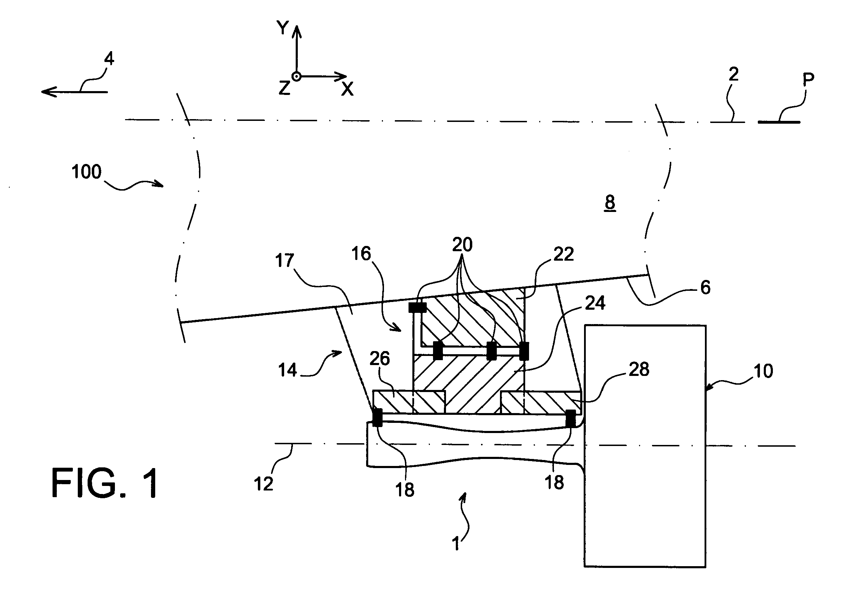

En référence à la figure 1, on voit une partie arrière 100 d'aéronef intégrant un ensemble moteur 1 se présentant sous la forme d'un mode de réalisation préféré de la présente invention.

Dans toute la description qui va suivre, par convention, on appelle X la direction longitudinale de l'aéronef, qui est parallèle à un axe longitudinal 2 de cet aéronef. D'autre part, on appelle Y la direction orientée transversalement par rapport à l'aéronef, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par les moteurs, cette direction étant représentée schématiquement par la flèche 4.

Globalement, la partie arrière 100 comprend un fuselage 6, dont seulement une portion de la partie gauche a été représentée. La section transversale de ce fuselage est sensiblement circulaire, elliptique ou similaire, de centre passant par l'axe longitudinal 2, et délimitant un espace intérieur de l'aéronef 8.

De plus, il comprend deux ensembles moteurs 1 (un seul étant représenté) disposés de part et d'autre d'un plan médian vertical P passant par l'axe 2. Dans le mode de réalisation préféré, chaque ensemble 1 comprend un turbomoteur 10, indifféremment du type turboréacteur, turbopropulseur, ou autre. Chacun d'eux présente un axe longitudinal 12 sensiblement parallèle à la direction X. De plus, l'ensemble moteur 1 est disposé latéralement par rapport au fuselage 6, étant à cet égard précisé qu'un angle peut être prévu entre le plan horizontal médian de l'aéronef et le plan passant par les axes longitudinaux 2, 12 du turbomoteur et de l'aéronef. Typiquement cet angle peut être compris entre 10 et 35°. Quoiqu'il en soit, l'ensemble moteur 1 est considéré être rapporté latéralement sur l'aéronef, et plus précisément sur une partie arrière de celui-ci, sur le fuselage 6 ou une extension latérale de ce dernier, derrière la voilure principale.

Pour assurer la suspension du turbomoteur 10, il est prévu un mât d'accrochage 14, comportant une structure rigide 16 également dite structure primaire à travers laquelle sont repris les efforts, la structure rigide 16 étant classiquement habillée par des carénages aérodynamiques 17 également dénommées structures secondaires, comme représenté schématiquement en pointillés sur la figure 1.

Le mât 14 présente des premiers moyens de fixation interposés entre le turbomoteur 10 et la structure rigide 16, ces premiers moyens représentés schématiquement étant référencés 18 sur la figure 1. Par ailleurs, le mât 14 présente des seconds moyens de fixation interposés entre le turbomoteur 10 et la structure de l'aéronef, ces seconds moyens représentés schématiquement étant référencés 20 sur la figure 1. Dans le mode de réalisation préféré représenté, les seconds moyens 20 sont raccordés à une extension latérale 22 de fuselage, mais pourraient bien entendu être raccordés alternativement ou simultanément sur le fuselage lui-même.

Comme cela sera détaillé en référence aux figures suivantes, la structure rigide 16, qui a donc un rôle structurel, présente une conception modulaire en sens qu'elle comporte un caisson central 24, une extension avant 26 du caisson central, ainsi qu'une extension arrière 28 de ce caisson.

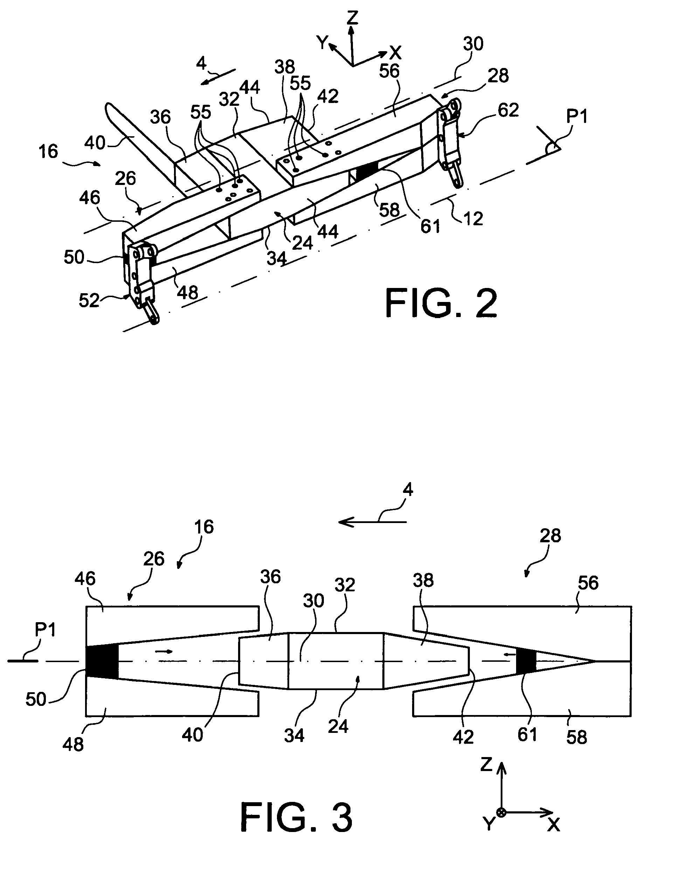

Sur les figures 2 et 3, on peut apercevoir la structure rigide 16, dont le caisson central 24 s'étend selon une direction principale 30 du mât, assimilable à sa direction longitudinale et parallèle à la direction X. Le caisson 24, s'étendant entre une extrémité avant 36 et une extrémité arrière 38, présente une peau supérieure formant surface supérieure 32, ainsi qu'une peau inférieure formant surface inférieure 34. Ce caisson peut présenter une nervure de fermeture avant 40 et une nervure de fermeture arrière 42, ainsi qu'éventuellement des nervures de fermeture latérale 44 et des nervures intérieures de renfort (non représentées). Comme visible sur la figure 2, dans ce mode de réalisation préféré, la nervure de fermeture avant 40 s'étend radialement au-delà du caisson dans la direction du fuselage, de manière à se rapprocher de ce dernier.

Le caisson 24, et plus généralement l'intégralité de la structure rigide 16, présente un plan fictif P1 formant sensiblement plan de symétrie, ce plan étant parallèle à la direction X, et passant préférentiellement par l'axe longitudinal du turbomoteur.

En coupe dans un plan orthogonal à ce plan de symétrie, comme celle de la figure 3, on peut apercevoir que l'extrémité avant 36 du caisson prend la forme globale d'un trapèze incliné à 90°, dont la petite base est située la plus en avant. De façon analogue, l'extrémité arrière 38 du caisson prend la forme globale d'un trapèze incliné à 90°, dont la petite base est située la plus en arrière. Entre les deux grandes bases des trapèzes se situe la partie centrale du caisson, de forme sensiblement rectangulaire.

Les extrémités avant et arrière 36, 38 sont destinées à recevoir les extensions avant et arrière 26, 28, respectivement, la combinaison de ces trois entités formant une conception modulaire pour la structure rigide 16, la rendant facilement adaptable aux différents types de turbomoteurs susceptibles d'être montés sur ce type de mât.

L'extension avant 26 comporte un organe supérieur 46 fixé et en appui sur la surface supérieure 32 de l'extrémité avant du caisson 24, ainsi qu'un organe inférieur 48 fixé et en appui sur la surface inférieure 34 de cette extrémité 36. Les deux organes 46, 48, prenant de préférence chacun la forme d'un caisson, ont leur extrémité arrière en appui et contact sur le caisson central, et s'étendent vers l'avant en direction de leur extrémité avant au-delà de la nervure de fermeture 40. Par conséquent, ils forment une extension longitudinale pour le caisson, ainsi qu'une extension dans la direction de l'épaisseur, orthogonale à la direction 30 et parallèle au plan de coupe de la figure 3.

L'organe supérieur et l'organe inférieur sont de préférence raccordés l'un à l'autre au niveau de leur extrémité avant, de manière à former sensiblement un V ouvert vers l'arrière, ce V étant donc incliné à 90° et agencé dans le plan de coupe de la figure 3, de manière à loger l'extrémité avant 36 du caisson central entre les branches du V. Ainsi, les surfaces intérieures des branches du V sont en contact, de préférence surfacique, avec les deux côtés du trapèze formant l'extrémité avant 36, comme visible sur la figure 2.

Pour cette extension avant 26, présentant également le plan P1 comme plan de symétrie, les deux organes 46, 48 ont leur extrémité avant qui ne sont pas directement en contact, mais rapportées l'une à l'autre par un élément de jonction 50 situé entre ces deux extrémités avant, et formant l'extrémité du V. Naturellement, un contact direct entre les deux organes 46, 48 pourrait être prévu, sans sortir du cadre de l'invention.

L'extension avant 26 porte, au niveau des extrémités avant des organes, une attache moteur avant 52 faisant partie des premiers moyens de fixation précités. Cette attache moteur est de conception connue de l'homme du métier, à savoir du type comprenant des ferrures et des manilles.

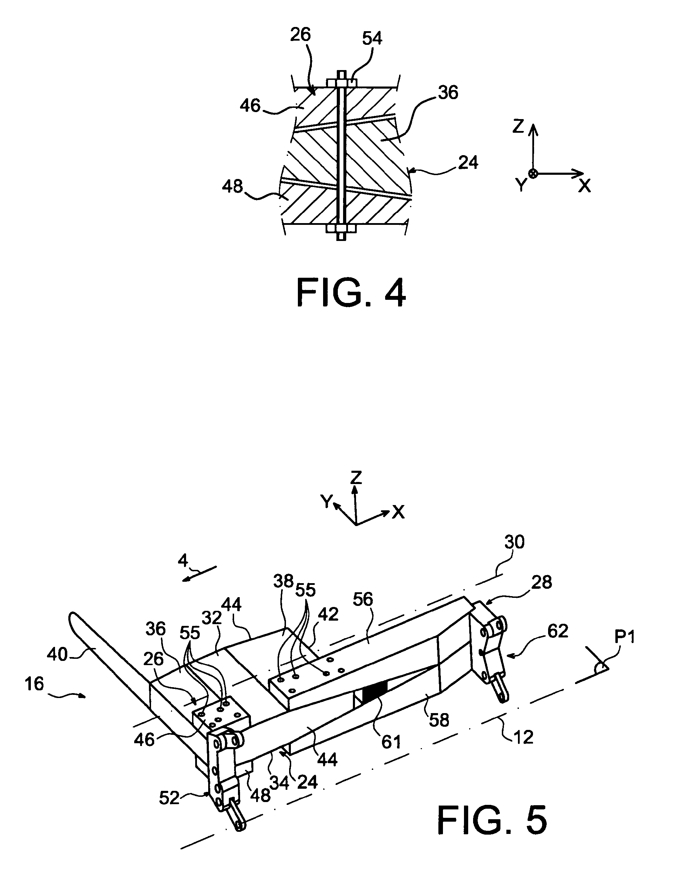

En référence à la figure 4, il est prévu une pluralité de tirants 54 sont assurant la fixation de l'extension avant 26 sur l'extrémité avant 36 du caisson central. Ces tirants 54 (un seul représenté sur la figure 4) sont de préférence orientés selon la direction de l'épaisseur, donc orthogonalement à la direction longitudinale 30, et traversent successivement l'organe supérieur 46, l'extrémité avant 36 et l'organe inférieur 48. Ces tirants, placés au niveau des orifices de l'organe supérieur 55 montrés sur la figure 2, permettent donc d'appliquer un effort de serrage par compression engendrant un plaquage de chacun des deux organes 46, 48 contre la surface de caisson 32, 34 lui faisant face.

De manière analogue, l'extension arrière 28 comporte un organe supérieur 56 fixé et en appui sur la surface supérieure 32 de l'extrémité arrière du caisson 24, ainsi qu'un organe inférieur 58 fixé et en appui sur la surface inférieure 34 de cette extrémité 38. Les deux organes 56, 58, prenant de préférence chacun le forme d'un caisson, ont leur extrémité avant en appui et contact sur le caisson central, et s'étendent vers l'arrière en direction de leur extrémité arrière au-delà de la nervure de fermeture 42. Par conséquent, ils forment une extension longitudinale pour le caisson, ainsi qu'une extension dans la direction de l'épaisseur, orthogonale à la direction 30 et parallèle au plan de coupe de la figure 3.

Ici, l'organe supérieur et l'organe inférieur sont de préférence raccordés l'un à l'autre au niveau de leur extrémité avant, de manière à former sensiblement un V ouvert vers l'avant, ce V étant donc incliné à 90° et agencé dans le plan de coupe de la figure 3, de manière à loger l'extrémité arrière 38 du caisson central entre les branches du V. Ainsi, les surfaces intérieures des branches du V sont en contact, de préférence surfacique, avec les deux côtés du trapèze formant l'extrémité arrière 38, comme visible sur la figure 2.

Pour cette extension arrière 28, présentant également le plan P1 comme plan de symétrie, les deux organes 56, 58 ont leur extrémité arrière qui sont directement en contact l'une avec l'autre. Par ailleurs, il est possible d'interposer une pièce additionnelle de jonction 61 entre les deux branches, de manière à supporter celles-ci à distance de la pointe du V formée extrémité arrière des organes 56, 58

L'extension extrémité arrière 28 porte, au niveau des extrémités extrémité arrière des organes, une attache moteur arrière 62 faisant partie des premiers moyens de fixation précités. Cette attache moteur est de conception connue de l'homme du métier, à savoir du type comprenant des ferrures et des manilles. De préférence, les premiers moyens de fixation sont exclusivement constitués par la première et la seconde attache moteur, même si un dispositif de reprise des efforts de poussée à bielles latérales pourrait être ajouté, sans sortir du cadre de l'invention.

Même si cela n'a pas été représenté, une pluralité de tirants est également prévue pour assurer la fixation de l'extension arrière 28 sur l'extrémité arrière 38 du caisson central, d'une manière identique ou similaire à celle représentée sur la figure 4 pour l'extension avant 26.

Comme cela est visible sur les figures, les nervures latérales extérieures de fermeture des organes 46, 48, 56, 58 affleurent de préférence la nervure latérale extérieure de fermeture 44 du caisson 24. En revanche, ces organes ne s'étendent pas sur toute la longueur latérale du caisson 24, mais seulement sur une portion de celle-ci.

De préférence, les trois modules 24, 26, 28 de la structure rigide 16 sont réalisés en matériau métallique, préférentiellement en titane.

La figure 5 montre une alternative de réalisation dans laquelle seule la conception de l'extension avant 26 diffère par rapport à celle exposée ci-dessus. En effet, ses deux organes 46, 48 ne s'étendent plus en saillie vers l'avant du caisson central 24, mais affleurent la nervure de fermeture 40. Par conséquent, les deux extrémités avant des organes 46, 48 restent séparées l'une de l'autre par l'extrémité avant 36 du caisson, interposée entre celles-ci.

Ce type de structure rigide est préférentiellement retenue par rapport à la précédente lorsque les deux attaches moteur 52, 62 doivent être sensiblement rapprochées l'une de l'autre pour s'adapter aux points de jonction du turbomoteur associé. Naturellement, la conception décrite pour l'extension avant 26 peut également s'appliquer pour l'extension arrière 28.

Bien entendu, diverses modifications peuvent être apportées par l'homme du métier à l'invention qui vient d'être décrite, uniquement à titre d'exemples non limitatifs.

## Revendications

1. Ensemble moteur (1) pour aéronef comprenant un turbomoteur (10) ainsi qu'un mât d'accrochage (14) du turbomoteur, ledit ensemble moteur étant destiné à être rapporté latéralement sur l'aéronef, le mât comportant une structure rigide (16) ainsi que des premiers moyens de fixation (18) interposés entre ladite structure rigide et le turbomoteur, ladite structure rigide comprenant un caisson central (24) s'étendant selon une direction principale (30) du mât, sensiblement parallèle à un axe longitudinal (12) du turbomoteur,
**caractérisé en ce que** ladite structure rigide (16) comporte en outre une extension avant (26) du caisson central (24), ladite extension avant comportant un organe supérieur (46) fixé et en appui sur une surface supérieure (32) d'une extrémité avant (36) du caisson central, ainsi qu'un organe inférieur (48) fixé et en appui sur une surface inférieure (34) de ladite extrémité avant (36) du caisson, ladite structure rigide comportant en outre une extension arrière (28) du caisson central (24), ladite extension arrière comportant un organe supérieur (56) fixé et en appui sur une surface supérieure (32) d'une extrémité arrière (38) du caisson central, ainsi qu'un organe inférieur (58) fixé et en appui sur une surface inférieure (34) de ladite extrémité arrière (38) du caisson, lesdites extensions avant et arrière (26, 28) portant au moins en partie lesdits premiers moyens de fixation (18).

2. Ensemble moteur (1) selon la revendication 1, **caractérisé en ce que** ladite extension avant (26) s'étend vers l'avant au-delà dudit caisson central (24), et/ou **en ce que** ladite extension arrière (28) s'étend vers l'arrière au-delà dudit caisson central (24).

3. Ensemble moteur (1) selon la revendication 1 ou la revendication 2, **caractérisé en ce que** l'organe supérieur et l'organe inférieur (46, 48) de ladite extension avant (26) sont raccordés l'un à l'autre au niveau de leur extrémité avant de manière à former sensiblement un V ouvert vers l'arrière et logeant ladite extrémité avant (36) du caisson central entre les branches du V, et/ou l'organe supérieur et l'organe inférieur (56, 58) de ladite extension arrière (28) sont raccordés l'un à l'autre au niveau de leur extrémité arrière de manière à former sensiblement un V ouvert vers l'avant et logeant ladite extrémité arrière (38) du caisson central entre les branches du V.

4. Ensemble moteur (1) selon l'une quelconque des revendications précédentes, **caractérisé en ce que** lesdits organes supérieurs et inférieurs (46, 48, 56, 58) prennent chacun la forme d'un caisson.

5. Ensemble moteur (1) selon l'une quelconque des revendications précédentes, **caractérisé en ce que** ladite extension avant (26) porte une attache moteur avant (52) desdits premiers moyens de fixation, et **en ce que** ladite extension arrière (28) porte une attache moteur arrière (62) desdits premiers moyens de fixation.

6. Ensemble moteur (1) selon l'une quelconque des revendications précédentes, **caractérisé en ce qu'**une pluralité de tirants (54) sont prévus pour la fixation de ladite extension avant (26) sur l'extrémité avant (36) du caisson central, lesdits tirants traversant successivement l'organe supérieur (46), l'extrémité avant (36) du caisson central et l'organe inférieur (48), et **en ce qu'**une pluralité de tirants (54) sont également prévus pour la fixation de ladite extension arrière (28) sur l'extrémité arrière (38) du caisson central, lesdits tirants traversant successivement l'organe supérieur (56), l'extrémité arrière (38) du caisson central et l'organe inférieur (68).

7. Ensemble moteur (1) selon l'une quelconque des revendications précédentes, **caractérisé en ce que** ladite structure rigide (16) présente un plan fictif (P1) parallèle à la direction longitudinale (X) du turbomoteur et formant sensiblement plan de symétrie pour ladite structure, les extrémités arrière des organes supérieur et inférieur (46, 48) de l'extension avant (26) se situant de part et d'autre de ce plan de symétrie (P1), et les extrémités avant des organes supérieur et inférieur (56, 58) de l'extension arrière (28) se situant de part et d'autre de ce plan de symétrie (P1).

8. Ensemble moteur (1) selon l'une quelconque des revendications précédentes, **caractérisé en ce que** le mât (14) comporte également des seconds moyens de fixation (20) destinés à être interposés entre ladite structure rigide et la structure de l'aéronef.

9. Aéronef comprenant au moins un ensemble moteur (1) selon l'une quelconque des revendications précédentes.

## Claims

1. An aircraft engine assembly (1) including a turbine engine (10) and a pylon (14) for mounting the turbine engine, where the said engine assembly is intended to be added on laterally to the aircraft, where the pylon includes a rigid structure (16) together with first fasteners (18) interposed between the said rigid structure and the turbine engine, and where the said rigid structure includes a central box (24) extending in a principal direction (30) of the pylon which is roughly parallel to a lengthways axis (12) of the turbine engine,
**characterised in that** the said rigid structure (16) also includes a forward extension (26) of the central box (24), where the said forward extension includes an attached upper organ (46) supported on an upper surface (32) of a front end (36) of the central box, together with an attached lower organ (48) supported on a lower surface (34) of the said front end (36) of the box, where the said rigid structure also includes a rear extension (28) of the central box (24), where the said rear extension includes an attached upper organ (56) supported on an upper surface (32) of a rear end (38) of the central box, and an attached lower organ (58) supported on a lower surface (34) of the said rear end (38) of the box, and where the said forward and rear extensions (26, 28) at least partially support the said first fasteners (18).

2. An engine assembly (1) according to claim 1, **characterised in that** the said forward extension (26) extends forwards beyond the said central box (24), and/or **in that** the said rear extension (28) extends towards the rear beyond the said central box (24).

3. An engine assembly (1) according to claim 1 or claim 2, **characterised in that** the upper organ and the lower organ (46, 48) of the said forward extension (26) are connected to one another in the area of their front ends, so as to form, roughly, a V shape opening towards the rear and housing the said front end (36) of the central box between the branches of the V, and/or the upper organ and the lower organ (56, 58) of the said rear extension (28) are connected to one another in the area of their rear ends, so as to form, roughly, a V shape opening towards the front and housing the said rear end (38) of the central box between the branches of the V.

4. An engine assemble (1) according to any of the previous claims, **characterised in that** the said upper and lower organs (46, 48, 56, 58) each have the shape of a box.

5. An engine assembly (1) according to any of the previous claims, **characterised in that** the said forward extension (26) supports an engine attachment (52) forward of the first fasteners, and **in that** the said rear extension (28) supports an engine attachment (62) to the rear of the said first fasteners.

6. An engine attachment (1) according to any of the previous claims, **characterised in that** multiple braces (54) are used to attach the said forward extension (26) to the front end (36) of the central box, where the said braces successively traverse the upper organ (46), the front end (36) of the central box and the lower organ (48), and **in that** multiple braces (54) are also used to attach the said rear extension (28) to the rear end (38) of the central box, where the said braces successively traverse the upper organ (56), the rear end (38) of the central box and the lower organ (68).

7. An engine assembly (1) according to any of the previous claims, **characterised in that** the said rigid structure (16) has an imaginary plane (P1) parallel to the lengthways direction (X) of the turbine engine, and roughly forming a plane of symmetry for the said structure, where the rear ends of the upper and lower organs (46, 48) of the forward extension (26) are positioned either side of this plane of symmetry (P1), and the front ends of the upper and lower organs (56, 58) of the rear extension (28) are positioned either side of this plane of symmetry (P1).

8. An engine assembly (1) according to any of the previous claims, **characterised in that** the pylon (14) also includes second fasteners (20) intended to be interposed between the said rigid structure and the structure of the aircraft.

9. An aircraft comprising at least one engine unit (1) according to any of the previous claims.

## Patentansprüche

1. Triebwerksystem (1) für ein Luftfahrzeug, umfassend ein Turbotriebwerk (10) sowie ein Aufhängungssystem (14) für das Turbotriebwerk, wobei das Triebwerksystem seitlich an dem Luftfahrzeug anzubringen ist, das Aufhängungssystem eine starre Struktur (16) sowie zwischen die starre Struktur und das Turbotriebwerk eingefügte erste Befestigungsmittel (18) aufweist, die starre Struktur einen zentralen Kasten (24) aufweist, der sich längs einer Hauptrichtung (30) des Aufhängungssystems erstreckt, die im Wesentlichen parallel zur Längsachse (12) des Turbotriebwerks ist,
**dadurch gekennzeichnet, dass** die starre Struktur (16) ferner eine vordere Erweiterung (26) des zentralen Kastens (24) aufweist, wobei die vordere Erweiterung ein oberes Element (46), das an einer oberen Oberfläche (32) eines Vorderendes (36) des zentralen Kastens befestigt und an dieser abgestützt ist, sowie ein unteres Element (48), das an einer unteren Oberfläche (34) des Vorderendes (36) des Kastens befestigt und an dieser abgestützt ist, aufweist, die starre Struktur ferner eine hintere Erweiterung (28) des zentralen Kastens (24) aufweist, wobei die hintere Erweiterung ein oberes Element (56), das an einer oberen Oberfläche (32) eines Hinterendes (38) des zentralen Kastens befestigt und an dieser abgestützt ist, sowie ein unteres Element (58), das an einer unteren Oberfläche (34) des Hinterendes (38) des Kastens befestigt und an dieser abgestützt ist, aufweist, wobei die vordere und die hintere Erweiterung (26, 28) zumindest teilweise die ersten Befestigungsmittel (18) tragen.

2. Triebwerksystem (1) nach Anspruch 1, **dadurch gekennzeichnet, dass** sich die vordere Erweiterung (26) über den zentralen Kasten (24) hinaus nach vorne erstreckt und/oder sich die hintere Erweiterung (28) über den zentralen Kasten (24) hinaus nach hinten erstreckt.

3. Triebwerksystem (1) nach Anspruch 1 oder Anspruch 2, dadurch gekenntzeichnet, dass das obere Element und das untere Element (46, 48) der vorderen Erweiterung (26) auf der Höhe ihres Vorderendes derart miteinander verbunden sind, dass sie im Wesentlichen ein V bilden, das nach hinten offen ist und das Vorderende (36) des zentralen Kastens zwischen den Schenkeln des V aufnimmt und/oder das obere Element und das untere Element (56, 58) der hinteren Erweiterung (28) auf der Höhe ihres Hinterendes derart miteinander verbunden sind, dass sie im Wesentlichen ein V bilden, das nach vorne offen ist und das Hinterende (38) des zentralen Kastens zwischen den Schenkeln des V aufnimmt.

4. Triebwerksystem (1) nach einem der vorhergehenden Ansprüche, dadurch gekenntzeichnet, dass die oberen und unteren Elemente (46, 48, 56, 58) jeweils die Form eines Kastens zeigen.

5. Triebwerksystem (1) nach einem der vorhergehenden Ansprüche, **dadurch gekennzeichnet, dass** die vordere Erweiterung (26) eine vordere Triebwerkbefestigung (52) der ersten Befestigungsmittel trägt und dass die hintere Erweiterung (28) eine hintere Triebwerkbefestigung (62) der ersten Befestigungsmittel trägt.

6. Triebwerksystem (1) nach einem der vorhergehenden Ansprüche, **dadurch gekennzeichnet, dass** mehrere Zugstangen (54) zur Befestigung der vorderen Erweiterung (26) am Vorderende (36) des zentralen Kastens vorgesehen sind, wobei die Zugstangen nacheinander durch das obere Element (46), das Vorderende (36) des zentralen Kastens und das untere Element (48) hindurchgehen, und dass mehrere Zugstangen (54) auch zur Befestigung der hinteren Erweiterung (28) am Hinterende (38) des zentralen Kastens vorgesehen sind, wobei die Zugstangen nacheinander durch das obere Element (56), das Hinterende (38) des zentralen Kastens und das untere Element (68) hindurchgehen.

7. Triebwerksystem (1) nach einem der vorhergehenden Ansprüche, **dadurch gekennzeichnet, dass** die starre Struktur (16) eine fiktive Ebene (P1) aufweiset, die parallel zur Längsrichtung (X) des Turbotriebwerks ist und im Wesentlichen eine Symmetrieebene für diese Struktur bildet, wobei sich die Hinterende des oberen und des unteren Elements (46, 48) der vorderen Erweiterung (26) auf der einen bzw. der anderen Seite dieser Symmetrieebene (P1) befinden und sich die Vorderenden des oberen und des unteren Elements (56, 58) der hinteren Erweiterung (28) auf der einen bzw. der anderen Seite dieser Symmetrieebene (P1) befinden.

8. Triebwerksystem (1) nach einem der vorhergehenden Ansprüche, **dadurch gekennzeichnet, dass** das Aufhängungssystem (14) auch zweite Befestigungsmittel (20) aufweist, die zwischen die starre Struktur und die Struktur des Luftfahrzeug einzufügen sind.

9. Luftfahrzeug, umfassend mindestens ein Triebwerksystem (1) nach einem der vorhergehenden Ansprüche.
